# EUROPÄISCHE PATENTSCHRIFT

(11) **EP 3 134 218 B1**
(45) Veröffentlichungstag und Bekanntmachung des Hinweises auf die Patenterteilung: **17.10.2018**
(21) Anmeldenummer: 15714224.1
(22) Anmeldetag: 07.04.2015
(51) Int. Cl.: B21J 15/02, B21J 15/14, B29C 65/56

(54) **VERFAHREN FÜR DIE SERIENMÄSSIGE ERZEUGUNG VON STANZNIETVERBINDUNGEN ZWISCHEN FVK-WERKSTÜCKEN UND METALL-WERKSTÜCKEN**
METHOD FOR THE SERIES PRODUCTION OF PUNCH RIVET CONNECTIONS BETWEEN FRP WORKPIECES AND METAL WORKPIECES
PROCÉDÉ DE PRODUCTION EN SÉRIE DE RIVETAGES PAR PRESSION ENTRE DES PIÈCES EN MATIÈRE PLASTIQUE RENFORCÉE PAR DES FIBRES ET DES PIÈCES MÉTALLIQUES

(30) Priorität: 25.04.2014 DE 102014207816
(43) Veröffentlichungstag der Anmeldung: 01.03.2017
(73) Patentinhaber: Bayerische Motoren Werke Aktiengesellschaft, 80809 München (DE)
(72) Erfinder: WILHELM, Maximilian, 87439 Kempten (DE); FALKENBERG, Hans-Juergen, 84130 Dingolfing (DE); GSCHNEIDINGER, Rainer, 94447 Plattling (DE)
(86) Internationale Anmeldenummer: PCT/EP2015/057465
(87) Internationale Veröffentlichungsnummer: WO 2015/161999

(56) Entgegenhaltungen:
- EP-A1- 1 366 836
- DE-A1- 19 729 368
- DE-A1- 19 731 222
- DE-U1- 29 824 739
- US-A1- 2013 273 314

## Beschreibung

Gemäß dem Oberbegriff des Patentanspruchs 1 (Siehe die US 2013/273314 A1) betrifft die Erfindung ein Verfahren für die serienmäßige Erzeugung von Stanznietverbindungen zwischen FVK-Werkstücken und Metall-Werkstücken bei der Serienherstellung entsprechender Werkstückverbunde, wobei die bei der Herstellung eines Werkstückverbunds zu fügenden Werkstücke an vorgesehenen Fügestellen mit Hilfe einer Setzeinrichtung durch vorlochfreies Setzen von Halbhohlstanznieten gefügt werden.
Das Fügen von Werkstücken durch Stanznieten, d. h. durch Erzeugen wenigstens einer Stanznietverbindung, ist aus dem Stand der Technik bekannt, wozu stellvertretend auf die DE 199 05 528 A1 hingewiesen wird. Ergänzend wird auch auf die DE 199 09 821 A1 hingewiesen.
Der Erfindung liegt die Aufgabe zugrunde, ein Verfahren betreffender Art anzugeben, das wenigstens einen mit dem Stand der Technik einhergehenden Nachteil nicht oder zumindest nur in einem verminderten Umfang aufweist.
Zur Lösung dieser Aufgabe wird ein erfindungsgemäßes Verfahren entsprechend den Merkmalen des Patentanspruchs 1 vorgeschlagen. Bevorzugte Weiterbildungen und Ausgestaltungen des erfindungsgemäßen Verfahrens ergeben sich sowohl aus den abhängigen Patentansprüchen als auch aus den nachfolgenden Erläuterungen.

Ein FVK-Werkstück ist ein platten- bzw. blechartiges und aus FVK-Material (FVK = faserverstärkter Kunststoff) gebildetes Werkstück. Vorzugsweise handelt es sich um ein CFK-Material (CFK = kohlenstofffaserverstärkter Kunststoff) oder GFK-Material (GFK = glasfaserverstärkter Kunststoff), insbesondere mit einer duroplastischen Matrix.
Die im Rahmen des erfindungsgemäßen Verfahrens verwendeten FVK-Werkstücke weisen, insbesondere herstellungsbedingt, eine Dickentoleranz auf, wodurch sich toleranzbedingte Dickenschwankungen ergeben, die bezüglich der Solldicke in einem Bereich von +/- 0,2 mm liegen. Die toleranzbedingten Dickenschwankungen umfassen somit einen absoluten Bereich von 0,4 mm. Damit ergibt sich bei einer Solldicke von bspw. 1,7 mm ein Dickenbereich von 1,5 mm bis 1,9 mm für die FVK-Werkstücke.
Ein Metall-Werkstück ist ein aus Metall-Material gebildetes Werkstück. Vorzugsweise handelt es sich um ein Blechwerkstück, d. h. um ein aus Blechmaterial und insbesondere Stahlblechmaterial gebildetes Werkstück. Ein Metall-Werkstück kann jedoch auch ein Gusswerkstück, ein Profilwerkstück oder dergleichen sein.
Das Fügen wenigstens eines FVK-Werkstücks mit wenigstens einem Metall-Werkstück zur Herstellung eines entsprechenden Werkstückverbunds (damit ist ein aus wenigstens einem FVK-Werkstück und wenigstens einem Metall-Werkstück gebildeter Werkstückverbund, der auch als Mischverbund bezeichnet werden kann, gemeint) erfolgt durch vorlochfreies Setzen wenigstens eines Halbhohlstanzniets an einer vorgesehenen Fügestelle mit Hilfe einer Setzeinrichtung, die einen Setzstempel und eine mit diesem Setzstempel korrespondierende Matrize umfasst. Beim Setzen eines Halbhohlstanzniets wird dieser an der vorgesehenen Fügestelle mit Hilfe der Setzeinrichtung vorlochfrei durch das FVK-Werkstück bzw. FVK-Material gedrückt und mit dem Metall-Werkstück bzw. dem Metall-Material verpresst. Dieser an und für sich aus dem Stand der Technik bekannte Vorgang wird auch als Setzvorgang bezeichnet. Ergänzend können die Werkstücke auch noch miteinander verklebt und/oder durch Verwendung anderer Fügehilfselemente gefügt werden (so genanntes Hybridfügen). Nachdem durch das Setzen wenigstens eines Halbhohlstanzniets und insbesondere mehrerer Halbhohlstanzniete ein Werkstückverbund hergestellt wurde, werden im Zuge der Serienherstellung in analoger Weise weitere Werkstückverbunde hergestellt. Das erfindungsgemäße Verfahren dient insbesondere der Serienherstellung von Karosseriebauteilen (sowohl Einbau- als auch Anbauteile) für Kraftfahrzeuge.

Erfindungsgemäß werden für die fortlaufend bzw. in Serie mit einer Setzeinrichtung ausgeführten Setzvorgänge (zur Serienherstellung von Werkstückverbunden, wie vorausgehend erläutert) identische Halbhohlstanzniete verwendet, womit insbesondere gemeint ist, dass diese Nietelemente eine gleiche axiale Länge (Nietlänge) und den selben Durchmesser (Nietdurchmesser) aufweisen. Um trotz der toleranzbedingten Dickenschwankungen der verwendeten FVK-Werkstücke fehlerfreie Stanznietverbindungen zu erhalten ist erfindungsgemäß ferner vorgesehen, dass die Setzeinrichtung und/oder deren Betriebsparameter bzw. Einstellungen im Hinblick auf die toleranzbedingten Dickenschwankungen der verwendeten FVK-Werkstücke optimiert ist/sind. Mit anderen Worten formuliert heißt dies, dass aufgrund der Ausgestaltung der Setzeinrichtung und/oder aufgrund der eingestellten Betriebsparameter mit denselben Nietelementen und unabhängig von der toleranzbeeinflussten Dicke des momentan zu fügenden FVK-Werkstücks immer eine fehlerfreie Verbindung (i.O.-Verbindung) erzielt bzw. erreicht wird. Selbsterklärend hat diese Vorgehensweise viele Vorteile.

Erfindungsgemäß ist demnach vorgesehen, dass die Ausgestaltung der Setzeinrichtung und/oder die Wahl und Einstellung deren Betriebsparameter nicht anhand einer starren bzw. spezifischen Solldicke der zu fügenden FVK-Werkstücke festgelegt wird/werden, sondern dass hierbei toleranzbedingte Dickenschwankungen der FVK-Werkstücke berücksichtigt werden, so dass die Setzeinrichtung und/oder deren Betriebsparameter im Hinblick auf einen sich aus den toleranzbedingten Dickenschwankungen ergebenden Dickenbereich (nur der FVK-Werkstücke oder gegebenenfalls auch der Werkstückpaarung) optimiert ist bzw. optimiert sind.

Dies kann bspw. dadurch erfolgen, dass mit einem vorausgehend festgelegten Nietelementtyp (mit bestimmten Nietdurchmesser und bestimmter Nietlänge) mehrere Stanznietverbindungen mit einem Sollmaß aufweisenden FVK-Werkstück, sowie mehrere Stanznietverbindungen mit dem toleranzbedingt dicksten und auch dem toleranzbedingt dünnsten FVK-Werkstück hergestellt werden (bspw. jeweils fünfzehn Stanznietverbindungen), wobei gegebenenfalls verschiedene Setzkräfte und/oder verschieden ausgestaltete Setzeinrichtungen verwendet werden. Nachfolgend werden die hergestellten Stanznietverbindungen anhand von Schliffbildern (Makroschliffen) insbesondere im Hinblick auf die erzielten Hinterschnitte und/oder die erreichten Restbodendicken (und/oder sonstigen Bewertungskriterien) bewertet und/oder ausgewertet. Hieraus kann dann wenigstens eine geeignete Vorgaben für die Setzeinrichtung (insbesondere zur Ausgestaltung deren Setzmatrize) und/oder für deren Betriebsparameter bzw. Einstellungen (bspw. eine optimale Setzkraft) abgeleitet werden, die nicht auf eine spezifische Dicke der FVK-Werkstücke abgestellt ist, sondern die im Hinblick auf toleranzbedingte Dickenschwankungen und/oder einen sich hieraus ergebenden Dickenbereich optimiert ist.
Bevorzugt werden die Betriebsparameter bzw. Einstellungen für die Setzeinrichtung so gewählt bzw. vorgenommen, dass jeder mit der Setzeinrichtung ausgeführte Setzvorgang mit einer identischen bzw. mit der selben Setzkraft ausgeführt wird (d. h. jeder der identischen Halbhohlstanzniete wird mit der selben Setzkraft gesetzt, nicht jedoch mit identischem Setzweg, was bspw. die Folge einer Wegsteuerung für den Setzstempel wäre), wobei die verwendete bzw. an der Setzeinrichtung eingestellte Setzkraft auf einen sich aus den toleranzbedingten Dickenschwankungen ergebenden Dickenbereich der FVK-Werkstücke abgestimmt und damit im Hinblick auf die toleranzbedingten Dickenschwankungen optimiert ist. Eine Kraftsteuerung für den Setzstempel ist vorgesehen. Bevorzugt ist ferner vorgesehen, dass auch die Matrize der Setzeinrichtung auf einen sich aus den toleranzbedingten Dickenschwankungen ergebenden Dickenbereich der FVK-Werkstücke abgestimmt und damit im Hinblick auf die toleranzbedingten Dickenschwankungen optimiert ist. Die Abstimmung bezieht sich insbesondere auf die bauliche Ausgestaltung der Matrize und kann bspw. den Kavitäts- bzw. Gravurdurchmesser und/oder die Kavitäts- bzw. Gravurtiefe, oder auch sonstige Gestaltungsmerkmale der Matrize, betreffen.

Die Erfindung sieht vor, dass zunächst die Dicke des zu fügenden FVK-Werkstücks gemessen und hieraufhin eine optimale, von der Setzeinrichtung zu erzeugende, Setzkraft ermittelt wird, was bevorzugt automatisch und insbesondere computerbasiert erfolgt. Die ermittelte optimale Setzkraft ermöglicht das fehlerfreie Setzen eines Halbhohlstanzniets. Messeinrichtungen zur Dickenmessung (bspw. auf Basis eines Wegmesssystems) sind aus dem Stand der Technik bekannt und können in die Anlagentechnik integriert werden.
Mit anderen Worten formuliert heißt dies, dass die toleranzbehaftete Dicke des zu fügenden FVK-Werkstücks bzw. FVK-Bauteils (oder alternativ die Gesamtdicke der Werkstückpaarung) zunächst gemessen wird und in Abhängigkeit der gemessenen Dicke die Setz- bzw. Fügekraft angepasst wird (Setzkraftanpassung), was insbesondere datenbankbasiert erfolgt (wie nachfolgend noch näher erläutert). Mit dem Setzstempel wird dann die ermittelte Setzkraft auf den zu setzenden Halbhohlstanzniet aufgebracht, wobei der Setzstempel mit einer Kraftsteuerung (nicht Wegsteuerung!) betrieben wird, so dass, trotz der toleranzbedingten Dickenschwankungen der zu fügenden FVK-Werkstücke, bei jedem Setzvorgang eine fehlerfreie Stanznietverbindung erzeugt werden kann.
In einer Weise, die nicht Teil der Erfindung ist, kann auch eine Anpassung des Setzweges erfolgen, um dadurch, trotz der toleranzbedingten Dickenschwankungen der zu fügenden FVK-Werkstücke, bei jedem Setzvorgang eine fehlerfreie Stanznietverbindung erzeugen zu können. Bevorzugt wird der Setzstempel dann mit einer Wegsteuerung betrieben. Mit anderen Worten heißt dies, dass zunächst die Dicke des zu fügenden FVK-Werkstücks gemessen und hieraufhin ein optimaler Setzweg ermittelt werden kann.
Eine Dickenmessung kann vor jedem Setzvorgang erfolgen, wobei eine spezifische optimale Setzkraft für den folgenden Setzvorgang ermittelt wird. Eine Dickenmessung kann auch einmalig für das gesamte zu fügende FVK-Werkstück erfolgen, wobei eine werkstückspezifische Setzkraft für alle am betreffenden Werkstück vorzunehmenden Setzvorgänge ermittelt wird. Bevorzugt wird die optimale Setzkraft aus einer Computerdatenbank, in der z. B. für verschiedene Dicken unterschiedlicher FVK-Werkstücke geeignete Setzkräfte hinterlegt sind, ermittelt. Eine solche Datenbank kann bspw. Ergebnisse beinhalten, die analog zu den obenstehenden Erläuterungen (zur Ermittlung wenigstens einer geeigneten Vorgabe für die Setzeinrichtung und/oder deren Betriebsparameter) ermittelt wurden.

Ferner kann bevorzugt vorgesehen sein, dass einzelne und insbesondere alle mit der Setzeinrichtung ausgeführten Setzvorgänge automatisch überwacht werden, wobei sich die Kriterien zur Beurteilung und Feststellung einer fehlerfreien Stanznietverbindung nicht auf eine spezifische Solldicke der FVK-Werkstücke, sondern auf einen sich aus den toleranzbedingten Dickenschwankungen ergebenden Dickenbereich der FVK-Werkstücke beziehen. Bevorzugt erfolgt die automatische Überwachung computerbasiert.

Die Erfindung wird nachfolgend anhand einer schematischen und nicht maßstabsgetreuen Figur beispielhaft näher erläutert.

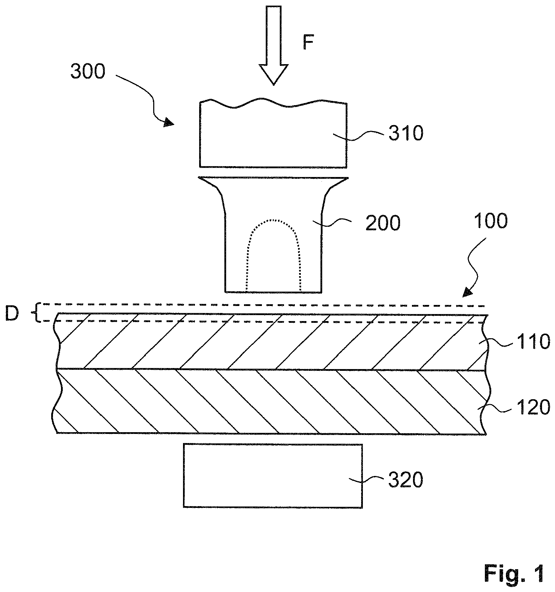

- Fig. 1: zeigt in einer Schnittansicht ausschnittsweise zwei Werkstücke, die mit einem Stanzniet gefügt werden.

Fig. 1 zeigt zwei Werkstücke 110 und 120, die an der gezeigten Fügestelle mit einem Halbhohlstanzniet 200 gefügt werden sollen. Der herzustellende Werkstückverbund ist mit 100 bezeichnet, wobei die Werkstücke 110 und 120 an mehreren Fügestellen gefügt werden können. Die dargestellten Werkstückdicken und das Dickenverhältnis der Werkstückpaarung 110/120 sind nur beispielhaft. Das obere platten- bzw. blechartige Werkstück 110 ist aus einem CFK-Material (oder einem anderen FVK-Material) gebildet. Das untere Werkstück 120 ist aus einem Blechmaterial gebildet. Bei dem unteren Werkstück 120 kann es sich auch um ein Gussteil, ein Profilteil oder dergleichen handeln.

Zum Erzeugen einer Stanznietverbindung wird der dargestellte Halbhohlstanzniet 200 in an und für sich bekannte Weise mit Hilfe einer Setzeinrichtung 300 ohne Vorlochen durch das obere Werkstück 110 gedrückt und hinterschnittig mit dem unteren Werkstück 120 verpresst. In analoger Weise können auch mehr als zwei Werkstücke gefügt werden. Die Setzeinrichtung 300 umfasst einen Setzstempel 310 zum Aufbringen einer Setzkraft F und eine gegenüberliegend des Setzstempels 310 angeordnete Matrize 320.

Die Setzeinrichtung 300 und die Setzkraft F werden im Stand der Technik anhand der Dicke des oberen CFK-Werkstücks 110 oder der Gesamtdicke der Werkstückpaarung beider Werkstücke 110 und 120 ausgelegt. Allerdings weist das obere CFK-Werkstück 110 herstellungsbedingt eine Dickentoleranz D auf, wodurch sich toleranzbedingte Dickenschwankungen ergeben, wie mit den beiden gestrichelten Linien veranschaulicht. Die Dickentoleranz D und die damit einhergehenden Dickenschwankungen führen bei einer serienmäßigen Erzeugung von Stanznietverbindungen zu einer reduzierten Qualität, insbesondere bezüglich erzielbarem Hinterschnitt und/oder erzielbarer Restbodendicke.

Die Erfindung sieht daher vor, dass im Rahmen einer serienmäßigen Erzeugung von Stanznietverbindungen bei den mit der Setzeinrichtung 300 fortlaufend ausgeführten Setzvorgängen einerseits identische Halbhohlstanzniete 200 verwendet werden und andererseits die Setzeinrichtung 300 und/oder deren Betriebsparameter im Hinblick auf die toleranzbedingten Dickenschwankungen der FVK-Werkstücke 110 optimiert ist/sind, wodurch ohne Veränderung der Nietlänge und/oder des Nietdurchmessers immer, d. h. bei jedem Setzvorgang, eine im Wesentlichen fehlerfreie Stanznietverbindung erzeugt wird.

Hierzu ist insbesondere vorgesehen, dass jeder Setzvorgang mit identischer Setzkraft F ausgeführt wird, wobei die verwendete Setzkraft F auf einen sich aus den toleranzbedingten Dickenschwankungen ergebenden Dickenbereich der FVK-Werkstücke 110 abgestimmt ist. Wie eine solche im Hinblick auf die toleranzbedingten Dickenschwankungen optimierte Setzkraft F ermittelt werden kann ist obenstehend erläutert. Auch die Matrize 320 kann baulich auf einen sich aus den toleranzbedingten Dickenschwankungen ergebenden Dickenbereich der FVK-Werkstücke 320 abgestimmt und dadurch im Hinblick auf die toleranzbedingten Dickenschwankungen optimiert sein, wie obenstehend erläutert.

Die Ausgestaltung der Setzeinrichtung 300, insbesondere deren Matrize 320, und/oder die Wahl bzw. Einstellung der Betriebsparameter, insbesondere der Setzkraft F, ist bzw. sind somit nicht auf eine spezifische Solldicke des oberen CFK-Werkstücks 110 oder eine festgelegte Dickenkombination beider Werkstücke 110/120 ausgelegt, sondern sind bzw. werden unter Beachtung bzw. Berücksichtigung toleranzbedingter Dickenschwankungen der zu fügenden CFK-Werkstücke 110 optimiert. Alle Fügevorgänge und die hierbei erzeugten Fügeverbindungen sind dadurch toleranzgerecht ausgelegt. Fehlerhafte Stanznietverbindungen und Ausschussteile können somit verhindert werden. Weitere Aspekte der Erfindung sind obenstehend erläutert.

## Patentansprüche

1. Verfahren für die serienmäßige Erzeugung von Stanznietverbindungen zwischen FVK-Werkstücken (110) und Metall-Werkstücken (120) bei der Serienherstellung entsprechender Werkstückverbunde (100), wobei die bei der Herstellung eines Werkstückverbunds (100) zu fügenden Werkstücke (110, 120) an vorgesehenen Fügestellen mit Hilfe einer Setzeinrichtung (300), die einen Setzstempel (310) umfasst, durch vorlochfreies Setzen von Halbhohlstanznieten (200) gefügt werden,
**dadurch gekennzeichnet, dass**
für die mit der Setzeinrichtung (300) in Serie ausgeführten Setzvorgänge identische Halbhohlstanzniete (200) verwendet werden, obwohl die verwendeten FVK-Werkstücke (110) bezüglich einer Solldicke toleranzbedingte Dickenschwankungen (D) in einem Bereich von +/- 0,2 mm aufweisen, wobei die Setzeinrichtung (300) und/oder deren Betriebsparameter im Hinblick auf die toleranzbedingten Dickenschwankungen (D) der FVK-Werkstücke (110) derart optimiert ist/sind, dass einerseits zunächst die Dicke eines zu fügenden FVK-Werkstücks (110) gemessen und hieraufhin eine optimale, von der Setzeinrichtung (300) zu erzeugende Setzkraft (F) ermittelt und andererseits der Setzstempel (310) mit einer Kraftsteuerung betrieben wird, so dass, trotz der toleranzbedingten Dickenschwankungen (D) der zu fügenden FVK-Werkstücke (110), bei jedem Setzvorgang eine fehlerfreie Stanznietverbindung erzeugt wird.

2. Verfahren nach Anspruch 1,
**dadurch gekennzeichnet, dass**
die optimale Setzkraft (F) aus einer Computerdatenbank ermittelt wird.

3. Verfahren nach einem der vorausgehenden Ansprüche,
**dadurch gekennzeichnet, dass**
die FVK-Werkstücke (110) aus einem CFK-Material mit duroplastischer Matrix gebildet sind.

4. Verfahren nach einem der vorausgehenden Ansprüche,
**dadurch gekennzeichnet, dass**
einzelne und insbesondere alle Setzvorgänge automatisch überwacht werden, wobei sich die Kriterien zur Beurteilung und Feststellung einer fehlerfreien Stanznietverbindung auf einen sich aus den toleranzbedingten Dickenschwankungen (D) ergebenden Dickenbereich der FVK-Werkstücke (110) beziehen.

5. Verfahren zur Serienherstellung von Karosseriebauteilen für Kraftfahrzeuge, **dadurch gekennzeichnet, dass** Stanznietverbindungen mit einem Verfahren nach einem der vorausgehenden Ansprüche erzeugt werden.

## Claims

1. A method for the series production of punch-rivet connections between FRP workpieces (110) and metal workpieces (120) in the series production of corresponding workpiece composites (100), wherein the workpieces (110, 120) to be joined in the production of a workpiece composite (100) are joined at provided joining points with the aid of a setting means (300) which comprises a setting punch (310), by setting, free from pre-drilled holes, of semi-tubular punch rivets (200),
identical semi-tubular punch rivets (200) are used for the setting operations carried out in series with the setting means (300), although the FRP workpieces (110) used have tolerance-related thickness fluctuations (D) with respect to a desired thickness in a range of +/- 0.2 mm, the setting means (300) and/or the operating parameters thereof being optimised with regard to the tolerance-related thickness fluctuations (D) of the FRP workpieces (110) such that on one hand first of all the thickness of an FRP workpiece (110) which is to be joined is measured and hereupon an optimum setting force (F) which is to be generated by the setting means (300) is ascertained and on the other hand the setting punch (310) is operated with a force control means so that, despite the tolerance-related thickness fluctuations (D) of the FRP workpieces (110) which are to be joined, a defect-free punch-rivet connection is produced upon each setting operation.

2. A method according to Claim 1,
**characterised in that**
the optimum setting force (F) is ascertained from a computer database.

3. A method according to one of the preceding claims,
**characterised in that**
the FRP workpieces (110) are formed from a CFRP material with a thermoset matrix.

4. A method according to one of the preceding claims,
**characterised in that**
individual, and especially all the, setting operations are monitored automatically, the criteria for assessing and establishing a defect-free punch-rivet connection relating to a thickness range of the FRP workpieces (110) which is yielded from the tolerance-related thickness fluctuations (D).

5. A method for the series production of body components for motor vehicles,
**characterised in that**
punch-rivet connections are produced with a method according to one of the preceding claims.

## Revendications

1. Procédé de fabrication en série d'assemblages par rivets poinçonnants entre des pièces en matériau composite FVK (110) et des pièces métalliques (120) lors de la fabrication en série d'ensembles composites de pièces correspondants (100), selon lequel, les pièces (110, 120) à joindre lors de la fabrication d'un ensemble composite de pièces (100) sont assemblées par mise en place sans perçage préalable de rivets poinçonnants demi-ouverts (200) sur des emplacements d'assemblage prévus à l'aide d'un dispositif de pose (300), comprenant un poinçon de pose (310),
**caractérisé en ce qu'**
on utilise, pour les processus de pose effectués en série avec le dispositif de pose (300), des rivets poinçonnants demi-ouverts (200) identiques bien que les pièces composites FVK (110) utilisées présentent par rapport à une épaisseur de consigne des fluctuations d'épaisseur (D) dues à la tolérance dans une plage de +/- 0,2 mm, le dispositif de pose (300) et/ou ses paramètres de fonctionnement étant optimisé(s) concernant les fluctuations d'épaisseur (D) dues à la tolérance des pièces composites FVK (110) de sorte que, d'une part, l'épaisseur d'une pièce composite FVK à joindre (110) soit tout d'abord mesurée puis, qu'en réponse la force de pose (F) optimum devant être produite par le dispositif de pose (300) soit déterminée et, que d'autre part, le poinçon de pose (310) soit actionné avec une commande de force de sorte que malgré les fluctuations d'épaisseur dues à la tolérance (D) des pièces composites FVK (110) à joindre, pour chaque processus de pose, un assemblage par rivet poinçonnant exempt de défaut puisse être obtenu.

2. Procédé conforme à la revendication 1,
**caractérisé en ce que**
La force de pose optimum (F) est déterminée à partir d'une banque de données informatique.

3. Procédé conforme à l'une des revendications précédentes,
**caractérisé en ce que**
le matériau composite FVK (110) est formé par un matériau à base de fibres de carbone CFK avec une matrice thermodurcissable.

4. Procédé conforme à l'une des revendications précédentes,
**caractérisé en ce que**
certains des processus de pose et en particulier tous les processus de pose sont surveillés automatiquement, et, les critères permettant d'évaluer et de déterminer un assemblage par rivet poinçonnant exempt de défaut se réfèrent à une plage d'épaisseur des pièces composites FVK (110) consécutive aux fluctuations d'épaisseur (D) dues à la tolérance.

5. Procédé de fabrication en série de composants de carrosserie de véhicules,
**caractérisé en ce que**
des assemblages par rivets poinçonnants sont obtenus par la mise en oeuvre d'un procédé conforme aux revendications précédentes.
